Europäisches Patentamt

European Patent Office

Office européen des brevets

(19)

(11) Veröffentlichungsnummer : **0 018 525**
**B1**

(12)

# EUROPÄISCHE PATENTSCHRIFT

(45) Veröffentlichungstag der Patentschrift :
**16.02.83**

(21) Anmeldenummer : **80101961.3**

(22) Anmeldetag : **11.04.80**

(51) Int. Cl.³ : **H 04 Q 11/04, H 04 M 1/72,**
**H 04 M 11/06**

(54) Schaltungsanordnung für eine digitale Fernsprechteilnehmerstation.

(30) Priorität : **30.04.79 DE 2917570**

(43) Veröffentlichungstag der Anmeldung :
**12.11.80 Patentblatt 80/23**

(45) Bekanntmachung des Hinweises auf die Patenterteilung : **16.02.83 Patentblatt 83/07**

(84) Benannte Vertragsstaaten :
**AT BE FR GB IT**

(56) Entgegenhaltungen :
**Keine**

(73) Patentinhaber : **Telefonbau und Normalzeit GmbH**
**Mainzer Landstrasse 128-146 Postfach 4432**
**D-6000 Frankfurt (Main) (DE)**

(72) Erfinder : **Kessler, Arthur, (Ing. grad.)**
**Mauerfeldstrasse 4**
**D-6370 Oberursel 5 (DE)**
Erfinder : **Lötzsch, Jürgen, Dipl.-Ing.**
**Anne-Frank-Strasse 16**
**D-6000 Frankfurt 50 (DE)**

## Schaltungsanordnung für eine digitale Fernsprechteilnehmerstation

Die Erfindung betrifft eine Schaltungsanordnung zum Anschluß von Zusatzeinrichtungen an eine digitale Fernsprechteilnehmerstation mit Einrichtungen (Codec) zur Umsetzung der auf der sternförmig an einer übergeordneten Vermittlungseinrichtung angeschlossenen, zweiadrigen und ferngespeisten individuellen Teilnehmeranschlußleitung im Vollduplexverkehr übertragenen digitalen Sprachinformationen in analoge Werte und umgekehrt und mit einer ersten Leitungsschaltung als Schnittstelle zur Teilnehmeranschlußleitung, wobei die an der Leitungsschaltung ankommenden Informationen an eine Schnittstelle zum Anschluß von Zusatzeinrichtungen weitergegeben werden und die von den Zusatzeinrichtungen ankommenden Informationen an die Teilnehmeranschlußleitung weitergegeben werden. Eine derartige digitale Fernsprechteilnehmerstation ist bereits bekannt. So wird beispielsweise in den Proceedings 1978 International Zurich Seminar on DIGITAL-COMMUNICATIONS im Kapitel D (Subscriber Terminals) auf den Aufbau und die Signalisierung bei digitalen Fernsprechstationen näher eingegangen. Dort wird auf der Seite D2.4 eine Schaltungsanordnung einer digitalen Fernsprechteilnehmerstation gezeigt, welche eine Leitungsschaltung als Schnittstelle zur Teilnehmeranschlußleitung aufweist, wobei die an der Leitungsschaltung ankommenden Informationen an eine Schnittstelle zum Anschluß von Zusatzeinrichtungen weitergegeben werden bzw. die von den Zusatzeinrichtungen ankommenden Informationen an die Teilnehmeranschlußleitung weitergegeben werden. Hierzu ist ein interner Datenbus vorgesehen, an welchem die Leitungsschaltung der Teilnehmeranschlußleitung, eine Steuereinrichtung, der Codec und die Leitungsschaltung zum Anschluß von Zusatzeinrichtungen angeschlossen sind. Nähere Einzelheiten über die Ausbildung der Schnittstelle zum Anschluß von Zusatzeinrichtungen lassen sich der zur Fig. 8 gehörenden Beschreibung nicht entnehmen.

Auf den Seiten D4.3 und D4.4 der eingangs genannten Druckschrift werden die Zusatzeinrichtungen beschrieben, welche an eine digitale Fernsprechteilnehmerstation anschließbar sind, beispielsweise Anrufbeantworter, Reihenanlagen, usw.

Die Aufgabe der Erfindung besteht nun darin, eine Möglichkeit anzugeben, wie auf einfache Weise die genannten Zusatzeinrichtungen an einer als Hauptanschluß betriebenen digitalen Fernsprechteilnehmerstation angeschlossen werden können.

Erfindungsgemäß wird diese Aufgabe dadurch gelöst, daß zum Anschluß von Zusatzeinrichtungen eine zweite Schnittstelle mit einer Leitungsschaltung vorgesehen ist, welche in ihrem Aufbau mit der als Schnittstelle dienenden ersten Leitungsschaltung zur Teilnehmeranschlußleitung identisch ist, wobei die auf der Teilnehmeranschlußleitung ankommenden Informationen, welche an den Klemmen der ersten Leitungsschaltung auftreten, über eine Verarbeitungseinrichtung an die Klemmen der zweiten Leitungsschaltung weitergegeben werden, daß mit diesen Klemmen eine interne Anschlußleitung zum Anschluß der der betreffenden digitalen Fernsprechteilnehmerstation zugeordneten Zusatzeinrichtungen verbindbar ist, daß die von den Zusatzeinrichtungen auf die interne Anschlußleitung übertragenen Informationen, welche an den Klemmen der zweiten Leitungsschaltung auftreten, über die Verarbeitungseinrichtung an die Klemmen der ersten Leitungsschaltung ebenfalls weitergegeben werden, wobei durch die Verarbeitungseinrichtung, welche zur Aufnahme, Auswertung und Erzeugung der empfangenen und auszusendenden Informationen (z. B. Sprachinformationen, Signalisierung, Adressierung) dient, die Weitergabe von Informationen verhindert wird, welche ausschließlich auf der internen Anschlußleitung benutzt werden.

Damit ist eine für alle an der internen Anschlußleitung anschließbaren Zusatzeinrichtungen einheitliche Schnittstelle vorhanden, da zumindest die auf der Teilnehmeranschlußleitung ankommenden PCM-Worte in unveränderter Form auch den Zusatzeinrichtungen angeboten werden bzw. die von den Zusatzeinrichtungen auf die interne Anschlußleitung ausgesendeten PCM-Worte der digitalen Fernsprechteilnehmerstation übermittelt werden, welche die PCM-Worte auf die Teilnehmeranschlußleitung weitergibt. Für die Signalisierungsinformationen gilt dies nur insoweit, wie die auf der Teilnehmeranschlußleitung ankommenden Informationen für die Zusatzeinrichtungen bestimmt sind bzw. wie diese von den Zusatzeinrichtungen zur Weitergabe an die Teilnehmeranschlußleitung übermittelt werden. Der gesamte, auf der Teilnehmeranschlußleitung ankommende, Informationsfluß wird von der Verarbeitungseinrichtung überwacht und an die zweite Leitungsschaltung weitergegeben, das gleiche geschieht mit dem auf der internen Anschlußleitung ankommenden Informationsfluß, welcher von der zweiten Leitungsschaltung aufgenommen, der Verarbeitungseinrichtung zugeführt, dort überprüft und an die erste Leitungsschaltung zur Übermittlung auf die Teilnehmeranschlußleitung weitergegeben wird.

In der eingangs genannten Druckschrift wird auf Seite D4.5 in Fig. 2 die Schaltungsanordnung für eine digitale Fernsprechteilnehmerstation gezeigt, welche ebenfalls eine besondere Schnittstelle zum Anschluß von Zusatzeinrichtungen aufweist. Diese ist jedoch in ihrem Aufbau und in ihrer Wirkungsweise nicht identisch mit derjenigen Leitungsschaltung, welche zum Anschluß der Teilnehmeranschlußleitung dient.

Eine vorteilhafte Weiterbildung der Erfindung besteht darin, daß die an den Klemmen der zweiten Leitungsschaltung auf der internen Anschlußleitung ankommenden Informationen abgehend an den gleichen Klemmen wiedergespiegel werden. Sind mehrere Zusatzeinrichtungen vorhanden, welche untereinander Informationen austauschen, so verläuft der Informationsfluß nicht direkt zwischen den jeweiligen Zusatzeinrichtungen sondern immer über die an der Teilnehmeranschlußleitung angeschlossene digitale Fernsprechteilnehmerstation. Diese überwacht den Informationsfluß, welcher an der zweiten Leitungsschaltung ankommt und der Verarbeitungseinrichtung zugeführt wird. Eine Weitergabe auf die Teilnehmeranschlußleitung erfolgt in diesem Fall nicht.

Eine vorteilhafte Weiterbildung der Erfindung besteht auch darin, daß an der internen Anschlußleitung eine weitere digitale Fernsprechteilnehmerstation angeschlossen ist, deren Klemmen der zweiten Leitungsschaltung mit den Klemmen der zweiten Leitungsschaltung der als Hauptanschluß betriebenen digitalen Fernsprechteilnehmerstation verbunden sind. Die einheitliche Schnittstelle der internen Anschlußleitung ermöglich den Anschluß einer weiteren digitalen Fernsprechteilnehmerstation als Zweitapparat oder als Nebenstelle, wobei in beiden Fällen der gleiche Apparatetyp in unveränderter Form eingesetzt werden kann, da durch den Anschluß an den Klemmen der ersten Leitungsschaltung oder der zweiten Leitungsschaltung bestimmt wird, ob die betreffende digitale Teilnehmerstation als Hauptanschluß oder als Zweitapparat oder Nebenstelle betrieben wird.

Eine Weiterbildung der Erfindung besteht ferner darin, daß an der internen Anschlußleitung eine digitale Anschlußdose angeschlossen ist, deren Klemmen mit den Klemmen der zweiten Leitungsschaltung der als Hauptanschluß betriebenen digitalen Fernsprechteilnehmerstation verbunden sind, und daß über die digitale Anschlußdose Zusatzeinrichtungen des Hauptanschlusses betrieben werden können. Unter den Zusatzeinrichtungen ist beispielsweise ein Zweitwecker, ein Telefonanrufbeantworter usw. zu verstehen.

Eine vorteilhafte Weiterbildung der Erfindung besteht auch darin, daß an der internen Anschlußleitung ein mit einer Datenendeinrichtung verbundener Modem angeschlossen ist, dessen Klemmen mit den Klemmen der zweiten Leitungsschaltung der als Hauptanschluß betriebenen digitalen Fernsprechteilnehmerstation verbunden sind. Über das Modem ist auch der Anschluß von Datenendeinrichtungen, wie Datensichtgeräten, Faksimilegeräten usw. möglich.

Eine Weiterbildung der Erfindung besteht schließlies darin, daß alle Zusatzeinrichtungen die gleiche Schnittstelle wie die als Hauptanschluß eingesetzte digitale Fernsprechteilnehmerstation aufweisen, daß jede Zusatzeinrichtung über die Klemmen der ersten Leitungsschaltung mit den Klemmen der zweiten Leitungsschaltung der davorliegenden Einrichtung verbunden ist und daß an den Klemmen der zweiten Leitungsschaltung der letzten Zusatzeinrichtung eine Einrichtung angeschlossen ist, welche die ankommenden Signale in abgehender Richtung wieder aussendet. Durch die Ausstattung aller an die interne Anschlußleitung anschließbaren Zusatzeinrichtungen mit einer der als Hauptanschluß eingesetzten digitalen Teilnehmerstation identischen Schnittstelle ist eine Kettenschaltung der einzelnen Zusatzeinrichtungen möglich, wobei die Zusatzeinrichtungen auch unverändert einzeln als Hauptanschluß einsetzbar sind.

Die Erfindung wird anhand eines Ausführungsbeispiels näher erläutert, welches in der Zeichnung dargestellt ist.

Es zeigt :

Figur 1 den Anschluß von Zusatzeinrichtungen an einer als Hauptanschluß betriebenen digitalen Fernsprechteilnehmerstation über eine gemeinsame interne Anschlußleitung,

Figur 2 das Blockschaltbild einer digitalen Fernsprechteilnehmerstation und

Figur 3 die Kettenschaltung von Zusatzeinrichtungen einer als Hauptanschluß betriebenen digitalen Fernsprechteilnehmerstation.

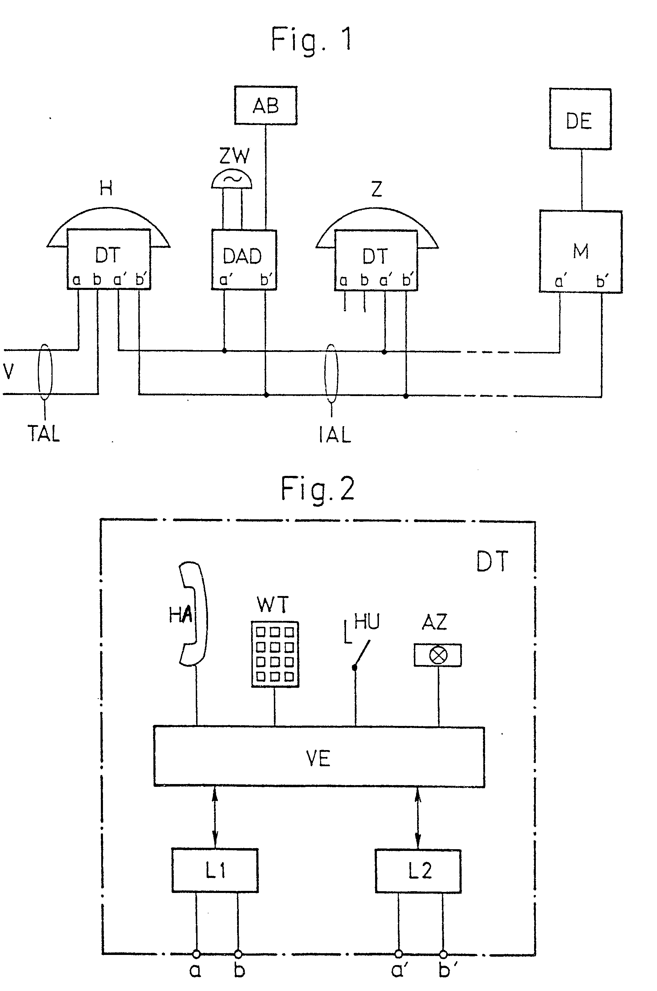

Zunächst wird an dem in Fig. 2 gezeigten Blockschaltbild einer digitalen Fernsprechteilnehmerstation DT die Funktionsweise näher beschrieben. Die beiden in ihrem Aufbau identischen Leitungsschaltungen L1 und L2 dienen zur galvanischen Trennung zwischen der Teilnehmerstation und der Anschlußleitung, sie sind mit Einrichtungen zum Schutz gegen Überspannungen und zur Umsetzung der auf den Anschlußleitungen verwendeten Übertragungsform der Informationen in eine digitale Darstellung und umgekehrt ausgestattet. Sie sind mit einer Verarbeitungseinrichtung VE verbunden, deren Aufgabe in der Aufnahme, Auswertung und Erzeugung der Informationen (PCM-Worte, Signalisierung, usw.) besteht. An der Schnittstelle zu den Leitungsschaltungen L1 und L2 besitzt die Verarbeitungseinrichtung VE jeweils Sende- und Empfangseinrichtungen, welche die Umsetzung der seriell ankommenden Informationen in eine parallele Form und die auszusendenden Informationen, welche parallel angeboten werden in eine serielle Form durchführen. Die an der Leitungsschaltung L1 ankommenden Informationen werden der Verarbeitungseinrichtung VE zugeführt, dort ausgewertet, und ebenfalls an die Leitungsschaltung L2 weitergegeben. Das gleiche geschieht mit den Informationen, welche an der Leitungsschaltung L2 eintreffen. Diese werden der Verarbeitungseinrichtung VE zugeführt, dort ausgewertet, und an die Leitungsschaltung L1 weitergegeben. Die Verarbeitungseinrichtung VE ist außerdem mit Analog/Digital- und Digital/Analog Wandlern ausgestattet, an welchen ein Handapparat HA angeschlossen ist. Zur Eingabe der Wahlinformation dient eine Wähltastatur WT, welche ebenfalls an der Verarbeitungseinrichtung VE angeschlossen ist. Ein Gabelumschalter HU dient zur Kennzeichnung des Aushängezustandes. Die Wähltastatur WT und der Gabelumschalter HU werden von der Verarbeitungseinrichtung VE abgefragt, wobei die übermittelten Informationen als Signalisierungsinformation weitergegeben werden. Weiterhin sind an der Verarbeitungseinrichtung VE Anzeigeeinrichtungen AZ angeschlossen, welche zur Anzeige von Betriebszuständen, Gebühreninformationen, usw. dienen. Auf weitere Funktionen einer digitalen Fernsprechteilnehmerstation DT wird in diesem Zusammenhang nur noch insoweit eingegangen, wie dies den Gegenstand der Erfindung betrifft oder wie dies zum Verständnis der Erfindung notwendig ist.

An der zu einer übergeordneten Vermittlungseinrichtung V führenden Teilnehmeranschlußleitung TAL ist eine digitale Fernsprechteilnehmerstation DT als Hauptanschluß H angeschlossen und zwar an den Klemmen a/b (Fig. 1). Mit den Klemmen a'/b' der digitalen Teilnehmerstation DT, welche als Hauptanschluß H eingesetzt ist, ist die interne Anschlußleitung IAL verbunden. Diese dient zum Anschluß von Zusatzeinrichtungen und zwar beispielsweise einer digitalen Anschlußdose DAD zum Betreiben eines Zweitweckers ZW oder eines Anrufbeantworters AB. Ebenso ist der Anschluß einer weiteren digitalen Fernsprechteilnehmerstation DT als Zweitapparat Z möglich. Darüber hinaus können auch Modems M zum Betreiben von Datenendeinrichtungen DE (Datensichtgeräte, Faksimilegeräte, usw.) eingesetzt werden. Während die digitale Anschlußdose DAD und der Modem M nur jeweils eine Schnittstelle (Klemmen a'/b') aufweisen, ist die als Zweitapparat Z eingesetzte digitale Fernsprechteilnehmerstation DT mit der als Hauptanschluß H eingesetzten digitale Fernsprechteilnehmerstation DT identisch, d. h. daß der gleiche Apparatetyp sowohl als Hauptanschluß als auch Zweitapparat verwendet werden kann. Die Einsatzart kann nun entweder durch einen Eingriff von außen an der Fernsprechteilnehmerstation eingestellt werden, es ist jedoch auch denkbar, als Kriterium für die Art des Einsatzes das Vorhandensein bzw. das Fehlen eines Datenstroms an den Klemmen a/b für die entsprechende Einsatzart zu verwenden.

Der Informationsaustausch der Zusatzeinrichtungen untereinander über die interne Anschlußleitung IAL erfolgt nicht direkt sondern grundsätzlich über die als Hauptanschluß H arbeitende digitale Fernsprechteilnehmerstation DT. Das bedeutet, daß die von einer Zusatzeinrichtung ausgesendete Information an den Klemmen a'/b' des Hauptanschlusses H wieder über die gleichen Klemmen an die interne Anschlußleitung IAL zurückgesendet wird. Dies ist beispielsweise dann der Fall, wenn bei Vorhandensein mehrerer Datenendeinrichtungen eine Untereinanderverbindung zweier Geräte hergestellt werden soll oder wenn beispielsweise der Hauptanschluß von der als Nebenstelle arbeitenden digitalen Fernsprechteilnehmerstation angerufen wird und der Zweitwecker ZW ansprechen soll.

Die Funktionen der einzelnen Einrichtungen werden im folgenden nun anhand von Betriebsbeispielen näher erläutert.

Ankommender Ruf

Trifft auf der Teilnehmeranschlußleitung TAL ein dem Rufsignal entsprechendes Signalisierungswort ein, so wird dies zunächst von der Verarbeitungseinrichtung VE der als Hauptanschluß H arbeitenden digitalen Fernsprechteilnehmerstation DT ausgewertet und die Aussendung eines Rufsignals (Wekker, Klangruf, usw.) veranlaßt. Außerdem erscheint dieses Signalisierungswort an den Klemmen a'/b' und gelangt somit auch auf die interne Anschlußleitung IAL. Es wird ebenso wie bei dem Hauptanschluß in der digitalen Anschlußdose DAD empfangen und ausgewertet, worauf der Zweitwecker ZW ebenfalls ein Rufsignal aussendet. Ist ein Zweitapparat Z angeschlossen, so ertönt dort ebenfalls ein Rufsignal. Wird nun an der als Hauptanschluß H eingesetzten digitalen Fernsprechteilnehmerstation der Handapparat HA abgehoben, so wird die Betätigung des Gabelumschalters durch die Verarbeitungseinrichtung VE erkannt und ein entsprechendes Signalisierungswort an die übergeordnete Vermittlungseinrichtung V über die Teilnehmeranschlußleitung TAL gesendet, worauf die Aussendung des ein Rufsignal auslösenden Signalisierungssignals beendet wird. Die auf der Teilnehmeranschlußleitung TAL eintreffenden Sprachsignale werden zwar auch auf die interne Anschlußleitung IAL weitergegeben, da jedoch eine von der als Hauptanschluß eingesetzten digitalen Fernsprechteilnehmerstation einzufügende Adressierung fehlt, wird die Sprachinformation von allen Zusatzeinrichtungen empfangen und ausgewertet, jedoch nicht in analoge Werte umgesetzt.

Wird nun im Rufzustand der Handapparat des Hauptanschlusses nicht abgehoben, und ist ein Anrufbeantworter AB an der digitalen Anschlußdose DAD angeschlossen, so schaltet sich nach einer vorgegebenen Zeit der Anrufbeantworter in die Verbindung, in dem ebenfalls das Aushängesignal von der Verarbeitungseinrichtung VE der digitalen Anschlußdose DAD als Signalisierungswort auf die interne Anschlußleitung IAL ausgesendet wird. Dieses gelangt zum Hauptanschluß und wird dort auf die Teilnehmeranschlußleitung TAL weitergegeben. Das Signalisierungssignal war von der Verarbeitungseinrichtung VE der digitalen Anschlußdose DAD mit einer Adresse versehen worden zur Kennzeichnung des Ursprungs. Diese Adresse wurde von der Verarbeitungseinrichtung VE der als Hauptanschluß H arbeitenden digitalen Fernsprechteilnehmerstation DT ausgewertet und nicht an die übergeordnete Vermittlungseinrichtung V weitergegeben worden. Die auf der Teilnehmeranschlußleitung ankommenden Sprachinformationen werden auf die interne Anschlußleitung IAL weitergegeben und zwar mit einer Adressinformation wodurch als empfangende Stelle die digitale Anschlußdose DAD gekennzeichnet wird. Die gleichen Vorgänge laufen ab, wenn der Handapparat der als Zweitapparat Z eingesetzten digitalen Fernsprechteilnehmerstation DT abgehoben wird. Der Aushängezustand des Zweitapparates wird bei dem Hauptanschluß optisch angezeigt.

Abgehende Verbindung

Wird bei dem Hauptanschluß H der Handapparat abgehoben, so erfolgt die Aussendung eines Signalisierungssignals sowohl an die übergeordnete Vermittlungseinrichtung über die Teilnehmeranschlußleitung TAL als auch auf die interne Anschlußleitung IAL, wobei im letzteren Fall zusätzlich eine Adressinformation mit übermittelt wird, worauf in der als Zweitapparat Z arbeitenden digitalen Teilnehmerstation DT eine optische Anzeige ausgelöst wird, das Aushängen des Handapparates bei dieser Station bleibt ohne Wirkung. Das Aushängesignal des Hauptanschlusses H bewirkt in der übergeordneten Vermittlungseinrichtung V die Aussendung eines Signalisierungssignals zur Wählaufforderung, welches in der digitalen Fernsprechteilnehmerstation DT des Hauptanschlusses H ein dem Wählzeichen entsprechendes Hörsignal auslöst. Das Signalisierungssignal gelangt wiederum auf die interne Anschlußleitung IAL, da jedoch eine zusätzliche Adressinformation fehlt, bleibt es wirkungslos. Die anschliessend eingegebene Wahlinformation am Hauptanschluß H gelangt über die Teilnehmeranschlußleitung zur übergeordneten Vermittlungsstelle V und ebenso auf die interne Anschlußleitung IAL, jedoch ohne eine zusätzliche Adresse. Die anschließend auf der Teilnehmeranschlußleitung TAL eintreffenden Sprachinformationen werden in der digitalen Fernsprechteilnehmerstation DT des Hauptanschlusses H in analoge Werte umgesetzt, gleichzeitig gelangen sie jedoch auch auf die interne Anschlußleitung IAL. Das gleiche geschieht mit den in der als Hauptanschluß H arbeitenden digitalen Fernsprechteilnehmerstation DT erzeugten analogen Signale, welche in Sprachsignale umgesetzt werden.

Ist die zweite (Z) digitale Fernsprechteilnehmerstation DT als Nebenstelle eingesetzt, so ist ohneweiteres eine Rückfrage vom Hauptanschluß zur Nebenstelle oder auch eine Gesprächsumlegung und zwar in beiden Richtungen möglich, da die Sprachinformationen immer auch über die interne Anschlußleitung IAL übertragen werden.

Internverbindung

Wird die zweite (Z) digitale Fernsprechteilnehmerstation DT als Nebenstelle betrieben, so sind auch untereinander Verbindungen zwischen beiden Stationen möglich. Das Aushängesignal der betreffenden Station wird in jedem Fall auch der übergeordneten Vermittlungsstelle V als Signalisierungssignal mitgeteilt, damit die betreffende Teilnehmeranschlußleitung TAL besetzt gekennzeichnet werden kann.

Die Auslösung aller beschriebenen Arten von Verbindungen erfolgt aufgrund der Einhängemeldung, welche von der betreffenden Verarbeitungseinrichtung VE durch Abfrage des Gabelumschalters in Form eines entsprechenden Signalisierungssignals ausgesendet wird. Auch dieses Signalisierungssignal gelangt in jedem Fall an die übergeordnete Vermittlungsstelle V damit auch bei einer Internverbindung die Teilnehmeranschlußleitung TAL wieder als frei gekennzeichnet werden kann.

Datenübertragung

Der Aufbau einer Verbindung zur Datenübertragung kann nun entweder durch den Hauptanschluß oder auch durch das betreffende Datenendgerät DE selbst veranlaßt werden. Die weiteren Abläufe erfolgen in der bereits beschriebenen Weise.

Bei dem beschriebenen Ausführungsbeispiel kann davon ausgegangen werden, daß es sich bei der Teilnehmeranschlußleitung TAL um eine sogenannte PCM1-Kanal-Leitung handelt, auf welcher die Sprachinformationen in Form von PCM-Worten mit einer Bitrate von 80 kBit/s übertragen werden, wobei die PCM-Worte aus einem Sprachinformationsteil von beispielsweise 8 Bit und einem Sonderteil von 2 Bit zur Übermittlung von Signalisierungsinformationen und Daten bestehen. Auf nähere Einzelheiten der Signalisierung wird im Rahmen dieser Beschreibung nicht weiter eingegangen, da sie den Gegenstand der Erfindung nicht betreffen.

Die Übermittlung der Informationen auf den Anschlußleitungen (TAL und IAL) geschieht nach einem Quittungsverfahren, wobei die Aussendung einer Information jeweils erst nach Empfang einer vorhergehenden Information stattfindet. Die einzelnen Einrichtungen (DT, DAD, M) sind zu diesem Zweck mit einer digitalen Zeitgabel ausgestattet.

Die Speisung des Hauptanschlusses H erfolgt durch die übergeordnete Vermittlungseinrichtung V über die Teilnehmeranschlußleitung TAL, während die Klemmen a'/b' und somit die interne Anschlußleitung IAL gleichstromfrei bleibt. Die Versorgung der Zusatzeinrichtungen erfolgt zweckmäßigerweise aus der Netzspannung, so daß bei deren Ausfall der Hauptanschluß betriebsfähig bleibt.

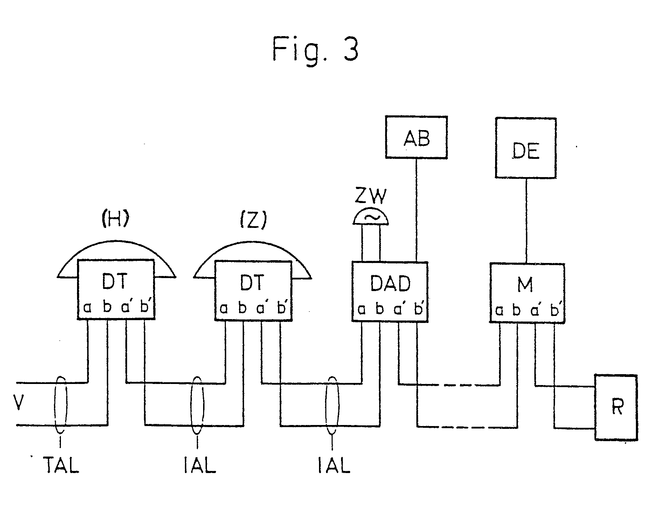

Eine abweichende Anschlußgestaltung wird in Fig. 3 gezeigt. Hierzu ist auch die digitale Anschlußdose DAD und der Modem M mit der gleichen Schnittstelle ausgestattet wie die digitale Fernsprechteilnehmerstation DT. Der Anschluß an die interne Anschlußleitung IAL erfolgt dabei in der Weise, daß jede Zusatzeinrichtung mit ihren Klemmen a/b an den Klemmen a'/b' der davorliegenden Einrichtung verbunden ist. Die auf diese Weise entstehende Kettenschaltung wird durch eine Einrichtung R abgeschlossen, welche an den Klemmen a'/b' der letzten Einrichtung angeschlossen ist. Die Einrichtung R sorgt dafür, daß der vom Hauptanschluß H ausgehende Informationsstrom nach Durchlaufen aller Zusatzeinrichtungen in umgekehrter Weise dorthin wieder zurückgesendet wird. Bei dieser Ausgestaltung der Anordnung können auch mehrere digitale Fernsprechteilnehmerstationen DT an dem Hauptanschluß H angeschlossen werden, wobei sogar eine Gesprächsverbindung zwischen den als Zusatzeinrichtung angeschlossenen Fernsprechteilnehmerstationen möglich ist.

Bei den in Fig. 1 und Fig. 3 gezeigten Anordnungen kann nun die Bitrate auf der internen Anschlußleitung IAL entweder mit derjenigen auf der Teilnehmeranschlußleitung TAL übereinstimmen, wodurch sich gleiche Schnittstellen für die Teilnehmeranschlußleitung TAL und die interne Anschlußleitung IAL ergeben, oder die Bitrate auf der internen Anschlußleitung IAL wird kleiner gewählt als diejenige auf der Teilnehmeranschlußleitung TAL. Auf diese Weise kann eine grössere Leitungslänge der internen Anschlußleitung IAL erzielt werden.

## Ansprüche

1. Schaltungsanordnung zum Anschluß von Zusatzeinrichtungen an eine digitale Fernsprechteilnehmerstation (DT) mit Einrichtungen (Codec) zur Umsetzung der auf der sternförmig an einer übergeordneten Vermittlungseinrichtung (V) angeschlossenen, zweiadrigen und ferngespeisten individuellen Teilnehmeranschlußleitung (TAL) im Vollduplexverkehr übertragenen digitalen Sprachinformationen in analoge Werte und umgekehrt und mit einer ersten Leitungsschaltung (L1) als Schnittstelle zur Teilnehmeranschlußleitung (TAL), wobei die an der Leitungsschaltung ankommenden Informationen an eine Schnittstelle zum Anschluß von Zusatzeinrichtungen weitergegeben werden und die von den Zusatzeinrichtungen ankommenden Informationen an die Teilnehmeranschlußleitung (TAL) weitergegeben werden, dadurch gekennzeichnet, daß zum Anschluß von Zusatzeinrichtungen eine zweite Schnittstelle mit einer Leitungsschaltung (L2) vorgesehen ist, welche in ihrem Aufbau mit der als Schnittstelle dienenden ersten Leitungsschaltung (L1) zur Teilnehmeranschlußleitung (TAL) identisch ist, wobei die auf der Teilnehmeranschlußleitung (TAL) ankommenden Informationen, welche an den Klemmen (a/b) der ersten Leitungsschaltung (L1) auftreten, über eine Verarbeitungseinrichtung (VE) an die Klemmen (a'/b') der zweiten Leitungsschaltung (L2) weitergegeben werden, daß mit diesen Klemmen (a'/b') eine interne Anschlußleitung (IAL) zum Anschluß der der betreffenden digitalen Fernsprechteilnehmerstation (DT) zugeordneten Zusatzeinrichtungen verbindbar ist, daß die von den Zusatzeinrichtungen auf die interne Anschlußleitung (IAL) übertragenen Informationen, welche an den Klemmen (a'/b') der zweiten Leitungsschaltung (L2) auftreten, über die Verarbeitungseinrichtung (VE) an die Klemmen (a/b) der ersten Leitungsschaltung (L1) ebenfalls weitergegeben werden, wobei durch die Verarbeitungseinrichtung (VE), welche zur Aufnahme, Auswertung und Erzeugung der empfangenen und auszusendenden Informationen (z. B. Sprachinformationen, Signalisierung, Adressierung) dient, die Weitergabe von Informationen verhindert wird, welche ausschließlich auf der internen Anschlußleitung (IAL) benutzt werden.

2. Schaltungsanordnung nach Anspruch 1, dadurch gekennzeichnet, daß die an den Klemmen (a'/b') der zweiten Leitungsschaltung (L2) auf der internen Anschlußleitung (IAL) ankommenden Informationen abgehend an den gleichen Klemmen (a'/b') wiedergespiegelt werden.

3. Schaltungsanordnung nach einem der Ansprüche 1 bis 2, dadurch gekennzeichnet, daß an der internen Anschlußleitung (IAL) eine weitere digitale Fernsprechteilnehmerstation (DT-Z) angeschlossen ist, deren Klemmen (a'/b') der zweiten Leitungsschaltung (L2) mit den Klemmen (a'/b') der zweiten Leitungsschaltung (L2) der als Hauptanschluß (H) betriebenen digitalen Fernsprechteilnehmerstation (DT) verbunden sind.

4. Schaltungsanordnung nach einem der Ansprüche 1 bis 3, dadurch gekennzeichnet, daß an der internen Anschlußleitung (IAL) eine digitale Anschlußdose (DAD) angeschlossen ist, deren Klemmen (a'/b') mit den Klemmen (a'/b') der zweiten Leitungsschaltung (L2) der als Hauptanschluß (H) betriebenen digitalen Fernsprechteilnehmerstation (DT) verbunden sind, und daß über die digitale Anschlußdose (DAD) Zusatzeinrichtungen des Hauptanschlusses betrieben werden können.

5. Schaltungsanordnung nach einem der Ansprüche 1 bis 4, dadurch gekennzeichnet, daß an der internen Anschlußleitung (IAL) ein mit einer Datenendeinrichtung (DE) verbundener Modem (M) angeschlossen ist, dessen Klemmen (a'/b') mit den Klemmen (a'/b') der zweiten Leitungsschaltung (L2) der als Hauptanschluß (H) betriebenen digitalen Fernsprechteilnehmerstation (DT) verbunden sind.

6. Schaltungsanordnung nach einem der Ansprüche 1 bis 5, dadurch gekennzeichnet, daß alle Zusatzeinrichtungen die gleiche Schnittstelle (a/b, a'/b') wie die als Hauptanschluß (H) eingesetzte digitale Fernsprechteilnehmerstation (DT) aufweisen, daß jede Zusatzeinrichtung über die Klemmen (a/b) der ersten Leitungsschaltung (L1) mit den Klemmen (a'/b') der zweiten Leitungsschaltung (L2) der davorliegenden Einrichtung verbunden ist und daß an den Klemmen (a'/b') der zweiten Leitungsschaltung (L2) der letzten Zusatzeinrichtung eine Einrichtung (R) angeschlossen ist, welche die ankommenden Signale in abgehender Richtung wieder aussendet.

## Claims

1. Circuit arrangement for the connection of additional equipment to a digital telephone station (DT) with units (codecs) for the conversion of the voice information in analog signals and vice versa, which are transmitted fullduplex via a two wire remotely fed individual subscriber's line (TAL) and with a first line circuit (L1) as interface to the subscriber's line (TAL), whereby the information arriving at the line circuit is forwarded to an interface for the connection of additional equipment and the information arriving from the additional equipment is forwarded to the subscriber's line, comprising a second interface (L2) having a line circuit for the connection of additional equipment, which is identical with the first line circuit (L1) for the subscriber's line (TAL), whereby the information arriving on the subscriber's line (TAL) and appearing at the terminals (a/b) is forwarded to the terminals (a'/b') of the second line circuit (L2), with these terminals an internal line (JAL) for the connection of additional equipment of the digital telephone station (DT) can be connected, the information transmitted from the additional equipment via the internal line (JAL) appearing at the terminals (a'/b') of the second line circuit (L2) is also retransmitted via a processor (VE) to the terminals (a/b) of the first line circuit, whereby the processor (VE), which is used for receiving, evaluation and generation of the received information and the information to be transmitted (for example speech information, signalling, addressing), prevents the retransmission of information, which is exclusively used on the internal line (JAL).

2. Circuit arrangement as set forth in claim 1, characterized in, that the incoming information arriving at the terminals (a'/b') of the second line circuit (L2) via internal line (JAL) is reflected at the same terminals (a'/b') for the outgoing direction.

3. Circuit arrangement as set forth in one of the claims 1 or 2, characterized in, that a second digital telephone station (DTZ) is connected with the internal line (JAL), its terminals (a'/b') of the second line circuit (L2) are connected with the terminals (a'/b') of the line circuit (L2) of the digital telephone station (DT) being operated as main telephone station.

4. Circuit arrangement as set forth in one of the claims 1 to 3, characterized in, that a digital socket (DAD) is connected with the internal line (JAL), the terminals (a'/b') of said digital socket (DAD) are connected with the terminals (a'/b') of the second line circuit (L2) of digital telephone station (DT) being operated as main telephone station, and that additional equipment of the main telephone station can be operated via said digital socket (DAD).

5. Circuit arrangement as set forth in one of claims 1 to 4, characterized in, that a modem (M) of a data terminal (DE) is connected with the internal line (JAL), the terminals (a'/b') of said modem (M) are connected with the terminals (a'/b') of the second line circuit (L2) of the digital telephone station (DT) being operated as main telephone station.

6. Circuit arrangement as set forth in one of the claims 1 to 5, characterized in, that all types of additional equipment are provided with identical interfaces (a/b, a'/b') as the digital telephone station (DT) being operated as main station, that each additional equipment is connected via its terminals (a/b) of the first line circuit (L1) with the terminals (a'/b') of the second line circuit of the preceeding equipment and that a unit (R) is connected with the terminals (a'/b') of the second line circuit (L2) of the last additional equipment, whereby said unit (R) retransmits the incoming signals in the outgoing direction.

**Revendications**

1. Montage servant à brancher des équipements supplémentaires à un poste téléphonique numérique (PN), comprenant des dispositifs (codeur-décodeur) de conversion en signaux analogiques, et inversement, des signaux numériques de parole transmis entièrement en duplex sur une ligne individuelle d'abonné (LA) branchée en étoile à une installation de commutation supérieure (C), ligne qui est à deux conducteurs et alimentée à distance, et comprenant un premier couplage de ligne (L1) comme point d'intersection pour la ligne individuelle d'abonné (LA), les signaux qui arrivent au couplage de ligne étant transmis à un point d'intersection destiné au branchement d'équipements supplémentaires et les signaux qui parviennent de ces équipements supplémentaires étant transmis à la ligne individuelle d'abonné (LA), caractérisé en ce que, pour le branchement d'équipements supplémentaires, il y a un deuxième point d'intersection avec un couplage de ligne (L2), dont la constitution est identique à celle du premier couplage de ligne (L1), servant de point d'intersection, pour la ligne individuelle d'abonné (LA), les signaux arrivant sur la ligne individuelle d'abonné (LA) et qui se présentent aux bornes (a/b) du premier couplage de ligne (L1) étant transmis, par l'intermédiaire d'un dispositif de traitement (DT), aux bornes (a'/b') du deuxième couplage de ligne (L2), en ce que l'on peut relier une ligne intérieure de branchement (LIB) à ces bornes (a'/b') pour brancher les équipements supplémentaires correspondant au poste téléphonique numérique (PN) considéré, en ce que les signaux envoyés à la ligne intérieure de branchement (LIB) par les équipements supplémentaires, signaux qui apparaissent aux bornes (a'/b') du deuxième couplage de ligne (L2), sont également transmis aux bornes (a/b) du premier couplage de ligne (L1) par l'intermédiaire du dispositif de traitement (DT), ce dernier, qui sert à recevoir, à exploiter et à produire les signaux reçus ou à émettre (par exemple des signaux de parole, de signalisation, d'adresse), empêchant la transmission de signaux utilisés exclusivement sur la ligne intérieure de branchement (LIB).

2. Montage selon la revendication 1, caractérisé en ce que les signaux arrivant aux bornes (a'/b') du deuxième couplage de ligne (L2) par la ligne intérieure de branchement (LIB) sont réfléchis, au départ, aux mêmes bornes (a'/b').

3. Montage selon l'une des revendications 1 et 2, caractérisé en ce qu'un deuxième poste téléphonique numérique (PN-D) est branché à la ligne intérieure de branchement (LIB), poste dont les bornes (a'/b') du deuxième couplage de ligne (L2) sont reliées aux bornes (a'/b') du deuxième couplage de ligne (L2) du poste téléphonique numérique (PN) servant de poste principal (PP).

4. Montage selon l'une des revendications 1 à 3, caractérisé en ce qu'une boîte de jonction numérique (BJN) est branchée à la ligne intérieure de branchement (LIB), les bornes (a'/b') de cette boîte de jonction étant reliée aux bornes (a'/b') du deuxième couplage de ligne (L2) du poste téléphonique numérique (PN) servant de poste principal (PP), et en ce que les équipements supplémentaires du poste principal peuvent être utilisés en passant par la boîte de jonction numérique (BJN).

5. Montage selon l'une des revendications 1 à 4, caractérisé en ce qu'un modem (M) est relié à un dispositif terminal pour données (TD) est branché à la ligne intérieure de branchement (LIB), modem dont les bornes (a'/b') sont reliées aux bornes (a'/b') du deuxième couplage de ligne (L2) du poste téléphonique numérique (PN) utilisé comme poste principal (PP).

6. Montage selon l'une des revendications 1 à 5, caractérisé en ce que, tous les équipements supplémentaires ont le même point d'intersection (a/b, a'/b') que le poste téléphonique numérique (PN) utilisé comme poste principal (PP), en ce que chaque équipement supplémentaire est relié, par les bornes (a/b) du premier couplage de ligne (L1), aux bornes (a'/b') du deuxième couplage de ligne (L2) de l'équipement qui le précède, et en ce qu'un dispositif (R) est branché aux bornes (a'/b') du deuxième couplage de ligne (L2) du dernier équipement supplémentaire, ce dispositif (R) réémettant dans le sens du départ les signaux qu'il reçoit.

# Fig. 1

AB

ZW

H

DT
a b a' b'

DAD
a' b'

Z

DT
a b a' b'

DE

M
a' b'

V

TAL

IAL

# Fig. 2

DT

HA

WT

L HU

AZ

VE

L1

L2

a b a' b'

1

# Fig. 3